# EUROPEAN PATENT SPECIFICATION

(11) **EP 4 328 052 B1**
(45) Date of publication and mention of the grant of the patent: **17.12.2025**
(21) Application number: 22811131.6
(22) Date of filing: 28.04.2022
(51) Int. Cl.: B60H 1/00

(54) **VEHICULAR AIR CONDITIONING DEVICE**
FAHRZEUGKLIMAANLAGE
DISPOSITIF DE CLIMATISATION DE VÉHICULE

(30) Priority: 27.05.2021 JP 2021089432
(43) Date of publication of application: 28.02.2024
(73) Proprietor: MITSUBISHI HEAVY INDUSTRIES THERMAL SYSTEMS, LTD., Tokyo 100-8332 (JP)
(72) Inventor: CHIKAGAWA, Noriyuki, Tokyo 100-8332 (JP)
(74) Representative: Hoffmann Eitle
(86) International application number: PCT/JP2022/019377
(87) International publication number: WO 2022/249857

(56) References cited:
- EP-A1- 2 450 203
- JP-A- 2005 162 096
- JP-A- 2014 148 185
- JP-A- 2018 079 714
- JP-A- 2018 079 715
- JP-A- 2018 079 718
- JP-U- S52 128 242
- US-A1- 2004 016 537

## Description

### Technical Field

The present invention relates to a vehicular air conditioning device.

### Background Art

A vehicular air conditioning device for conditioning air in a vehicle is provided inside a dashboard of an automobile. Such a vehicular air conditioning device includes a room temperature sensor that detects a temperature in a vehicle cabin and an aspirator that guides air in the vehicle cabin to a sensor installation portion where the room temperature sensor is disposed (for example, Patent Document 1).

### Citation List

### Patent Literature

Patent Document 1: JP 2018-79719 A

Further related art may be found in US 2004/016537 A1 which describes an automotive air-conditioner having an aspirator for a temperature sensor, in JP 2018 079718 A which describes an air conditioner for a vehicle and in EP 2 450 203 A1 which describes an aspirator and a vehicle air-conditioning device using the same.

### Summary of Invention

### Technical Problem

In recent years, there have been cases where another component (for example, a control device that controls a vehicular air conditioning device) is disposed at an end portion of a main body case in a width direction. In such a case, an aspirator cannot be attached to the end portion. Therefore, as in the device described in Patent Document 1, the aspirator may be attached at the center of the main body case in the width direction.

However, in the device of Patent Document 1, the opening (air intake port) formed at the upstream end of the air introduction pipe for introducing air into the main body of the aspirator is open on the downstream side in the flow of air in the air conditioning case. Specifically, the opening is open in a region downstream of a region where air that has passed through the evaporator and air that has passed through the heater core join (hereinafter referred to as
"downstream region"). The air flowing through the downstream region may have a reduced pressure. For this reason, in the device of Patent Document 1, the difference between the pressure in the space into which air is introduced and the pressure inside the main body of the aspirator becomes small, and air cannot be suitably taken in from the air intake port of the air introduction pipe. Thus, there is a possibility that the performance of the aspirator is reduced. When the performance of the aspirator is reduced, the air in the vehicle cabin cannot be guided to the room temperature sensor, the room temperature sensor cannot suitably detect a temperature, and the room temperature cannot be suitably controlled.

The present invention has been made in view of the above-described circumstances, and an object of the present invention is to provide a vehicular air conditioning device that can improve the performance of an aspirator.

### Solution to Problem

In order to solve the above-described problem, there is provided a vehicular air conditioning device for controlling a temperature of air introduced, and supplying the air into a vehicle cabin, as set out in independent claim 1. Preferred embodiments of the present invention are laid down in the appended dependent claims.

### Advantageous Effects of Invention

According to the present invention, the performance of the aspirator of the vehicular air conditioning device can be improved.

### Brief Description of Drawings

FIG. 1 is a perspective view of a vehicular air conditioning device according to an embodiment of the present invention.
FIG. 2 is a perspective view illustrating a main part of an air conditioning unit of the vehicular air conditioning device according to the embodiment of the present invention.
FIG. 3 is a vertical cross-sectional view of the air conditioning unit of the vehicular air conditioning device according to the embodiment of the present invention illustrating a state in which air is not guided to a heater core.
FIG. 4 is a vertical cross-sectional view of the air conditioning unit of the vehicular air conditioning device according to the embodiment of the present invention illustrating a state in which air is guided to the heater core.
FIG. 5 is a plan view of an air mixing damper provided at the HVAC unit of the vehicular air conditioning device according to the embodiment of the present invention.

### Description of Embodiments

An embodiment of a vehicular air conditioning device 1 according to the present invention will be described below with reference to the accompanying drawings. In the following description, an up-down direction is a Z-axis direction, a direction which is orthogonal to the Z-axis direction and in which an air conditioning unit 2 and a blower unit 3 are arranged is an X-axis direction, and a direction orthogonal to the Z-axis direction and the X-axis di recti on is a Y-axis direction.

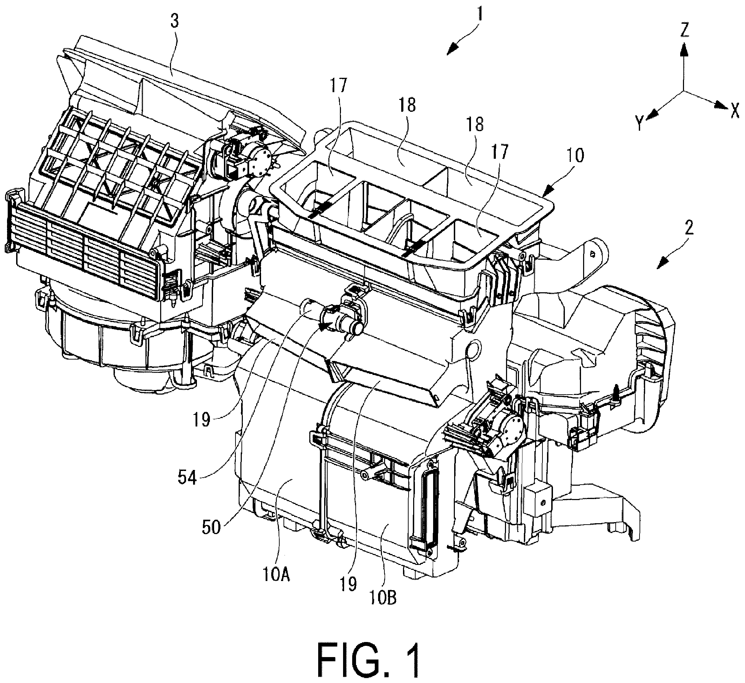

The vehicular air conditioning device 1 according to the present embodiment is provided in a space defined by an instrument panel of an automobile. As illustrated in FIG. 1, the vehicular air conditioning device 1 includes an air conditioning unit 2 (HVAC unit; Heating Ventilation and Air Conditioning Unit) that controls the temperature of air outside a vehicle (outside air) or air inside a vehicle cabin (inside air) and blows the air into the vehicle cabin, and a blower unit 3 that supplies the outside air or the inside air to the HVAC unit. The air conditioning unit 2 and the blower unit 3 are provided adjacent to each other in the X-axis direction.

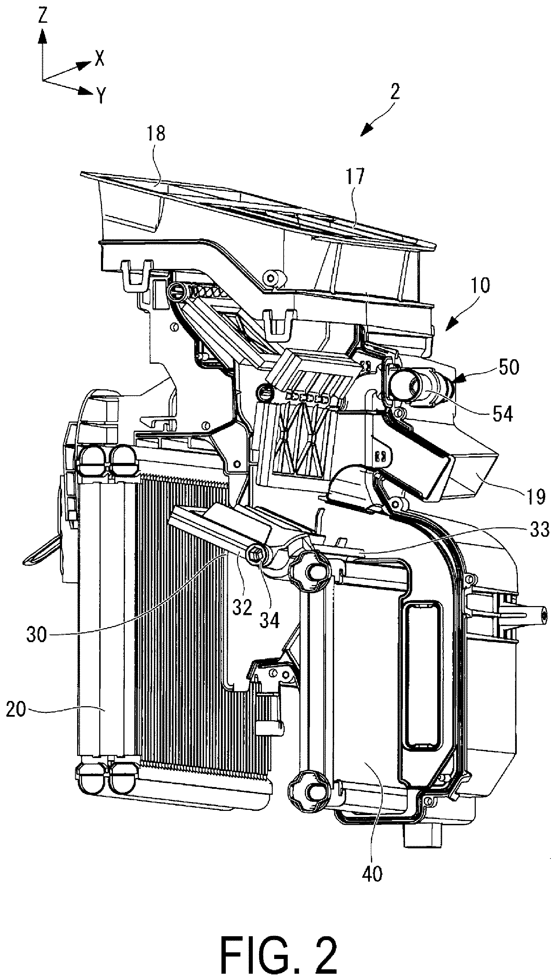

As illustrated in FIGS. 1 and 2 and the like, the air conditioning unit 2 (HVAC unit) includes a case body 10 (in FIG. 2, a part of the case body 10 is omitted for the sake of illustration). As illustrated in FIGS. 2 to 4, the air conditioning unit 2 further includes an evaporator (cooling unit) 20, an air mixing damper 30, and a heater core (heating unit) 40 which are housed in the case body 10.

As illustrated in FIG. 1, the case body (case) 10 integrally includes a first case 10A and a second case 10B aligned in the X-axis direction. The blower unit 3 is connected to a side wall of the first case 10A (a side wall opposite to a side wall facing the second case 10B). An actuator or the like that rotates the air mixing damper 30 to be described below is provided at a side wall of the second case 10B (a side wall opposite to a side wall facing the first case 10A). The first case 10A and the second case 10B have substantially the same structure. Thus, in the following description, the first case 10A and the second case 10B will not be described separately but will be simply referred to as the case body 10 unless the first case 10A and the second case 10B need to be described separately.

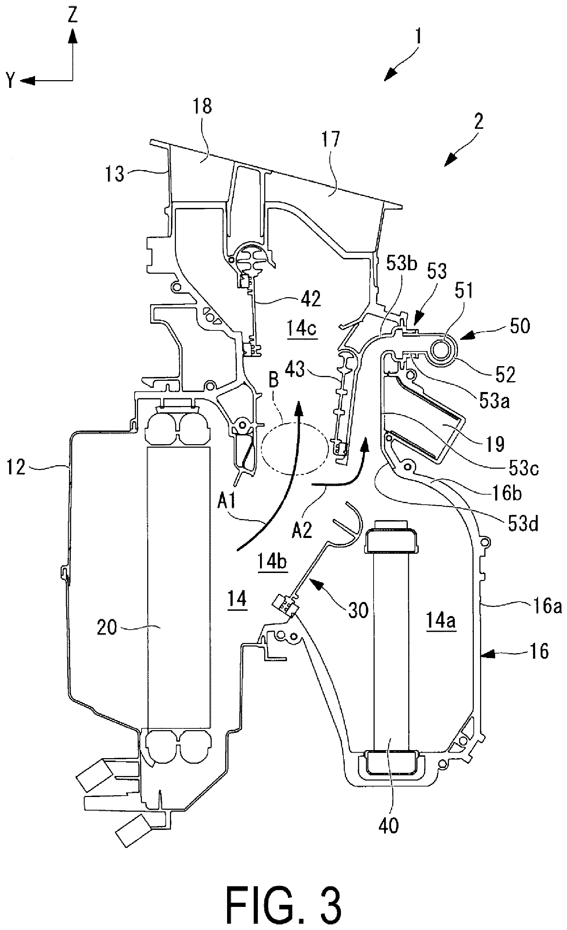

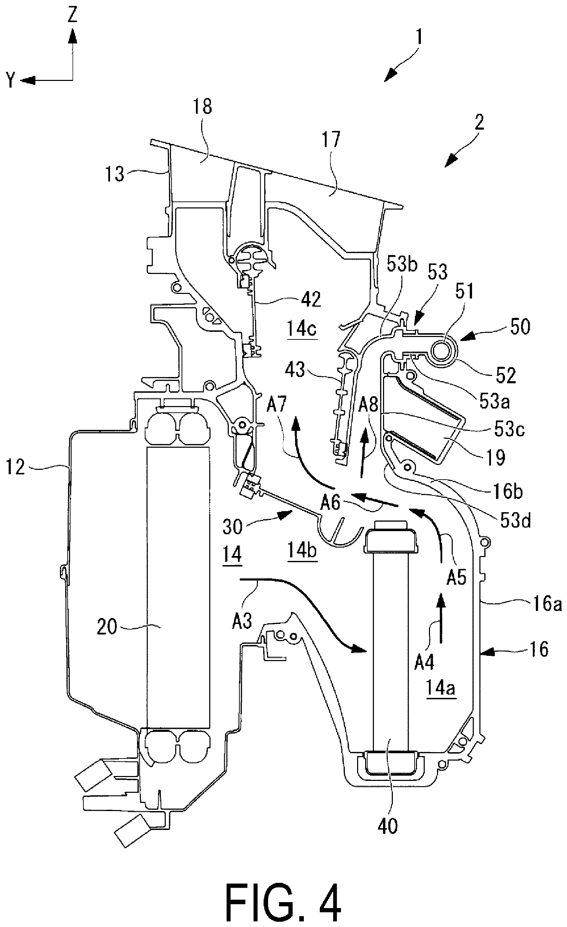

As illustrated in FIGS. 3 and 4, an air flow path 14 that guides air blown from the blower unit 3 into the vehicle cabin is formed inside the case body 10. The air flow path 14 includes a heating flow path 14a in which the heater core 40 is disposed, a bypass flow path 14b that bypasses the heater core 40, and an air mixing flow path 14c through which air obtained by mixing the air having flowed through the bypass flow path 14b and the air having flowed through the heating flow path 14a flows.

The case body 10 includes a case upstream portion (an upstream portion of the case) 12 in which the evaporator 20 and the heater core 40 are housed and a case downstream portion (a downstream portion of the case) 13 through which the air having flowed through the case upstream portion 12 flows.

The case upstream portion 12 mainly defines the bypass flow path 14b and the heating flow path 14a. The case upstream portion 12 includes a heating flow path defining portion 16 that defines the heating flow path 14a.

The heating flow path defining portion 16 includes a first flow path portion 16a that causes air to flow in the Z-axis direction (first direction) and a second flow path portion 16b that is provided on a downstream side of the first flow path portion 16a and causes air to flow in the Y-axis direction (second direction).

The first flow path portion 16a extends in the Z-axis direction and the X-axis direction. The first flow path portion 16a is provided to oppose the heater core 40.

The second flow path portion 16b is curved at a substantially right angle from an upper end of the first flow path portion 16a and extends in the Y-axis direction. A downstream end portion of the second flow path portion 16b extends in the Y-axis direction and the X-axis direction, and a primary air introduction portion 53 of the aspirator 50 to described below is connected to the downstream end portion.

The case downstream portion 13 mainly defines the air mixing flow path 14c. The case downstream portion 13 is connected to an upper end of the case upstream portion 12. The case downstream portion 13 is formed with a face outlet 17 for blowing air to the vicinity of the face of a passenger, a defroster outlet 18 for blowing air to the vicinity of the front window of the vehicle, and a foot outlet 19 for blowing air to the vicinity of the feet of the passenger.

As illustrated in FIGS. 3 and 4, the evaporator 20 is housed in the case body 10 and is disposed in the air flow path 14. The evaporator 20 is provided at an upstream portion of the air flow path 14. The evaporator 20 constitutes a refrigeration cycle (not illustrated). The evaporator 20 includes a plurality of tubes extending in the Z-axis direction, and the plurality of tubes are arranged side by side at predetermined intervals in the X-axis direction and the Y-axis direction. A refrigerant circulating in the refrigerant cycle flows through the plurality of tubes. The evaporator 20 cools the air flowing through the air flow path 14 by exchanging heat between the refrigerant flowing through the tubes and the air flowing through the air flow path 14.

The air flow path 14 branches into the bypass flow path 14b and the heating flow path 14a on a downstream side of the evaporator 20.

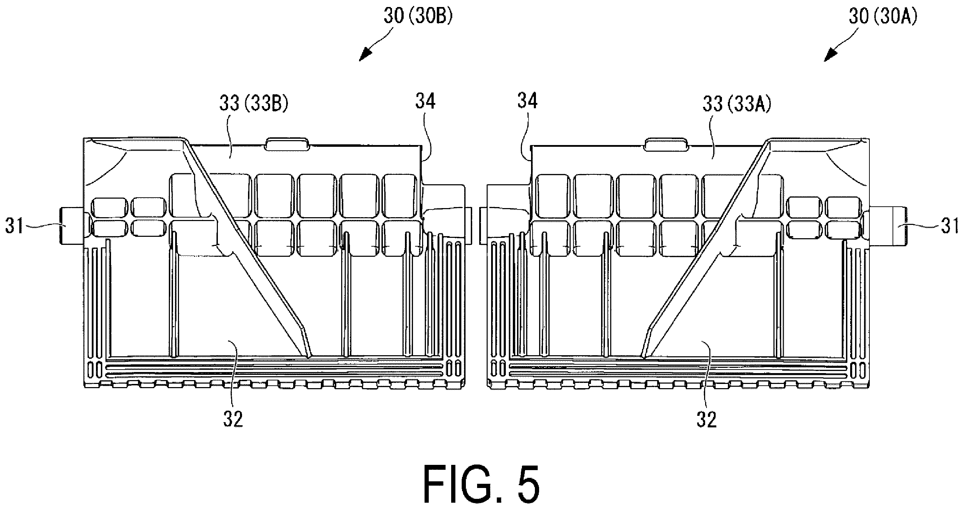

The air mixing damper 30 is provided at a branching portion between the bypass flow path 14b and the heating flow path 14a. The air mixing damper 30 is fixed to a rotor shaft 31 (see FIG. 5) rotatably provided in the case body 10. As illustrated in FIG. 5, the air mixing damper 30 integrally includes a main damper (first damper portion) 32 provided on an upstream side (evaporator 20 side) and a sub-damper (second damper portion) 33 provided on a downstream side (heater core 40 side) across the rotor shaft 31. The main damper 32 and the sub-damper 33 are connected so as to form an obtuse angle.

The main damper 32 moves between a closing position (see FIG. 3) at which the heating flow path 14a for guiding air to the heater core 40 is closed and an opening position (see FIG. 4) at which the heating flow path 14a is not closed. The main damper 32 closes the heating flow path 14a in a state where air is not guided to the heater core 40.

The sub-damper 33 is arranged between the evaporator 20 and the inlet 53d in a state where the main damper 32 is located at the closing position.

In the following description, the air mixing damper 30 housed in the first case 10A is referred to as a first air mixing damper 30A, and the air mixing damper 30 housed in the second case 10B is referred to as a second air mixing damper 30B. When it is not necessary to separately describe the first air mixing damper 30A and the second air mixing damper 30B, they will be simply referred to as the air mixing damper 30.

The sub-damper 33 of the first air mixing damper 30A (hereinafter referred to as a "first sub-damper 33A") and the sub-damper 33 of the second air mixing damper 30B (hereinafter referred to as a "second sub-damper 33B") each have a notch 34 formed at an end portion in the X-axis direction. The notch 34 formed at the first sub-damper 33A is formed at an end portion on the second sub-damper 33B side. Further, it is formed at an end portion on a downstream side in an air flow direction (that is, on the side far from the rotor shaft 31).

The notch 34 formed at the second sub-damper 33B is formed at an end portion on the first sub-damper 33A side. Each of FIGS. 3 and 4 is a cross-sectional view taken along a plane passing through the notch 34 formed at the sub-damper 33, the sub-damper 33 is not illustrated in FIGS. 3 and 4 for the sake of illustration.

The heater core 40 is disposed in the heating flow path 14a. The heater core 40 includes, for example, a plurality of tubes extending in the Z-axis direction, and the plurality of tubes are arranged side by side at predetermined intervals in the X-axis direction and the Y-axis direction. Engine cooling water for cooling an engine (not illustrated) flows inside the plurality of tubes. The heater core 40 heats the air flowing through the heating flow path 14a by exchanging heat between the engine cooling water flowing through the tubes and the air flowing through the heating flow path 14a.

The bypass flow path 14b and the heating flow path 14a join together above the air mixing damper 30 (see a region B in FIG. 3). The air flow path 14 joined is connected to the face outlet 17, the foot outlet 19, and the defroster outlet 18 formed at the case body 10. The air flow path 14 is provided with a defroster/face damper 42 that can switch between blowing air from the face outlet 17 and blowing air from a defroster outlet flow path. The air flow path 14 is further provided with a foot damper 43 that can switch whether or not to blow air from the foot outlet 19.

Next, the flow of air introduced into the air conditioning unit 2 will be described.

The air conditioning unit 2 cools air blown from the blower unit 3 by causing the air to pass through the evaporator 20. The cooled air is introduced into the heating flow path 14a and/or the bypass flow path 14b. At this time, the air conditioning unit 2 controls a ratio between the amount of air to be introduced into the heating flow path 14a (air to be guided to the heater core 40) and the amount of air to be introduced into the bypass flow path 14b (air bypassing the heater core 40) by adjusting the rotation position of the air mixing damper 30. An air unit mixes the air having flowed through the heater core 40 (heated air) and the air having bypassed the heater core 40 (unheated air) in a region where the heating flow path 14a and the bypass flow path 14b join each other (see the region B in FIG. 3), thereby controlling air to a predetermined temperature. Then, the air conditioning unit 2 selectively blows the temperature-controlled air into the vehicle cabin from the defroster outlet 18, the face outlet 17, the foot outlet 19, and the like provided on the downstream side, thereby controlling the temperature of the vehicle cabin to a set temperature. Whether or not to blow air from each outlet and the amount of air blown from each outlet are controlled by the rotation positions of the defroster/face damper 42 and the foot damper 43.

Specifically, in a cooling operation mode, for example, the vehicular air conditioning device 1 controls the rotation position of the air mixing damper 30 such that the air mixing damper 30 closes the inlet of the heating flow path 14a as illustrated in FIG. 3. In this way, as indicated by the arrow A1, the air having passed through the evaporator 20 flows through the bypass flow path 14b without flowing into the heating flow path 14a. Accordingly, the air blown from the defroster outlet 18, the face outlet 17, and the foot outlet 19 can be mainly the air having bypassed the heater core 40 (unheated air). Thus, the cooled air is supplied into the vehicle cabin. Note that as indicated by the arrow A2, part of the air flowing through the bypass flow path 14b is introduced into the aspirator 50 from the inlet 53d to be described below.

On the other hand, in a heating operation mode, for example, the vehicular air conditioning device 1 controls the rotation position of the air mixing damper 30 such that the air mixing damper 30 closes the bypass flow path 14b as illustrated in FIG. 4. In this way, as indicated by the arrow A3, the air having passed through the evaporator 20 flows through the heating flow path 14a without flowing into the bypass flow path 14b. After passing through the heater core 40, the air flowing through the heating flow path 14a rises along the first flow path portion 16a as indicated by the arrow A4. Subsequently, as indicated by the arrow A5, the flow direction is changed to the Y-axis direction along the second flow path portion 16b. Thereafter, as indicated by the arrow A6, the air flows along the Y-axis direction. Then, as indicated by the arrow A7, the air rises again and is guided to the defroster outlet 18, the face outlet 17, and the foot outlet 19. Accordingly, the air blown from the defroster outlet 18, the face outlet 17, and the foot outlet 19 can be mainly the air having passed the heater core 40 (heated air). Thus, the heated air is supplied into the vehicle cabin. Note that as indicated by the arrow A8, part of the air flowing through the heating flow path 14a (especially, part of the air flowing in the Y-axis direction after passing through the heater core 40) is introduced into the aspirator 50 from the inlet 53d to be described below.

Next, the aspirator 50 attached to the case body 10 will be described in detail.

In the vehicular air conditioning device 1, in order to control the temperature in the vehicle cabin to a set temperature, it is necessary to accurately detect the temperature in the vehicle cabin. A room temperature sensor that detects the temperature in the vehicle cabin is provided at an instrument panel (not illustrated) in the vehicle cabin. Thus, the vehicular air conditioning device 1 detects the temperature in the vehicle cabin by causing the air in the vehicle cabin to flow through the room temperature sensor. The aspirator 50 is used to guide the air in the vehicle cabin to the room temperature sensor.

As illustrated in FIG. 3, the aspirator 50 includes a nozzle 51, a main body 52 that forms a primary air flow path so as to surround the outer periphery of the nozzle 51, the primary air introduction portion (introduction portion) 53 that introduces part of an air flow flowing inside the air conditioning unit 2 into the primary air flow path of the main body 52 as primary air, and a diffuser 54 (see FIGS. 1 and 2) connected to an end portion of the main body 52.

The nozzle 51 is a tubular member and extends in the left-right direction. As described above, a leading end of the nozzle 51 opens to the inside of the diffuser 54. An air pipe (not illustrated) is connected to a base end of the nozzle 51. An upstream end of the air pipe is connected to a sensor installation portion (not illustrated) at which the room temperature sensor is disposed. The sensor installation portion communicates with the inside of the vehicle cabin. The nozzle 51 aspirates air in the vehicle cabin as secondary air via the sensor installation portion and the air pipe.

The main body 52 is a tubular member and extends in the left-right direction. The nozzle 51 is concentrically disposed inside the main body 52. The primary air flow path is formed between the inside surface of the main body and the outside surface of the nozzle 51. The primary air introduction portion 53 is connected to the outside surface of the main body 52.

The primary air introduction portion 53 integrally includes a horizontal portion 53a connected to the main body 52, a curved portion 53b curved downward at a substantially right angle from an upstream end of the horizontal portion 53a, and a vertical portion 53c extending downward from an upstream end of the curved portion 53b.

The horizontal portion 53a is a tubular member extending in the horizontal direction. A downstream end of the horizontal portion 53a is connected to the outside surface of the main body 52. The curved portion 53b is a tubular member. The curved portion 53b is connected to the upstream end of the horizontal portion 53a and a downstream end of the vertical portion 53c. The vertical portion 53c is a tubular member extending in the vertical direction. The inlet 53d is formed at an upstream end (lower end) of the vertical portion 53c. The diameter of the vertical portion 53c is reduced such that a flow path area decreases toward the upper side. The upstream end of the vertical portion 53c is connected to the second flow path portion 16b from above. Specifically, the vertical portion 53c is provided at a position corresponding to the notch 34 in the second flow path portion 16b.

The inlet 53d is disposed near the outlet of the heating flow path 14a. In addition, the inlet 53d is provided outside (above) the main flow (see the arrow A6 in FIG. 4) of the air flowing along the second flow path portion 16b. That is, the primary air introduction portion 53 is connected to the second flow path portion 16b so as not to protrude from the inside surface of the second flow path portion 16b. In addition, the inlet 53d opens in a region (hereinafter, referred to as an "upstream region") on an upstream side of a region (see the region B in FIG. 3) where the heating flow path 14a and the bypass flow path 14b join each other.

Next, the flow of air in the aspirator 50 will be described.

The aspirator 50 introduces part of the air flowing through the air flow path 14 from the primary air introduction portion 53. Specifically, part of the air flowing through the bypass flow path 14b as indicated by the arrow A2 in FIG. 3 and part of the air flowing in the Y-axis direction after passing through the heater core 40 as indicated by the arrow A8 in FIG. 4 are introduced from the primary air introduction portion 53.

The air introduced into the primary air introduction portion 53 flows through the vertical portion 53c, the curved portion 53b, and the horizontal portion 53a and is discharged into the main body 52. The air discharged into the main body 52 flows through the primary air flow path formed inside the main body 52. That is, the air flows between the inside surface of the main body 52 and the outside surface of the nozzle 51. The air having flowed through the primary air flow path flows into the diffuser 54 from the leading end side of the nozzle 51. The air having flowed through the diffuser 54 is discharged into the vehicle cabin from an open end of the diffuser 54.

When the air flows into the diffuser 54 from the primary air flow path, the pressure near the leading end of the nozzle 51 is reduced. This generates a flow of air from the base end toward the leading end in the nozzle 51. Thus, the nozzle 51 aspirates air from the base end (an end portion opposite to the leading end). The air pipe (not illustrated) is connected to the base end of the nozzle 51. The upstream end of the air pipe is connected to the sensor installation portion (not illustrated) at which the room temperature sensor is disposed. The sensor installation portion communicates with the inside of the vehicle cabin. Thus, the nozzle 51 aspirates air in the vehicle cabin (secondary air) via the sensor installation portion and the air pipe. Accordingly, when the nozzle 51 aspirates air, the air in the vehicle cabin suitably flows into the sensor installation portion. Then, the room temperature sensor detects the temperature of the air in the vehicle cabin. The air (secondary air) introduced into the nozzle 51 from the base end of the nozzle 51 is discharged into the diffuser 54 from the leading end of the nozzle 51 and is discharged to the outside of the vehicular air conditioning device 1 from the open end of the diffuser 54. Specifically, the air is discharged into the space defined by the instrument panel.

According to the present embodiment, the following operational effects are obtained.

In the present embodiment, the upstream end of the primary air introduction portion 53 is connected to the second flow path portion 16b from the Z-axis direction. In the second flow path portion 16b, air flows in the Y-axis direction. Thus, part of the air flowing through the second flow path portion 16b is introduced into the primary air introduction portion 53 from the inlet 53d by a static pressure. Accordingly, air can be introduced into the aspirator 50. Further, since air is introduced by a static pressure, a pressure loss can be reduced as compared with the case where air is introduced by a dynamic pressure. Therefore, the speed of the air flowing through the aspirator 50 can be increased as compared with the case where air is introduced by a dynamic pressure, whereby the performance of the aspirator 50 can be improved.

In the present embodiment, the inlet 53d opens to the second flow path of the case upstream portion 12 in which the evaporator 20 and the heater core 40 are housed. The pressure of the air flowing through the case upstream portion 12 is higher than the pressure of the air flowing through the case downstream portion 13. Thus, as compared with the case where the inlet 53d opens to the case downstream portion 13 (for example, where the inlet 53d opens to the air mixing flow path 14c), the difference between the pressure in the space to which the inlet 53d opens and the pressure inside the aspirator 50 is increased, whereby air can be easily taken from the inlet 53d into the primary air introduction portion 53. Accordingly, air can be suitably introduced into the aspirator 50, and thus the performance of the aspirator 50 can be improved.

In the present embodiment, the aspirator 50 is provided at a central portion of the case body 10 in the X-axis direction. That is, the aspirator 50 is not provided at an end portion of the case body 10 in the X-axis direction. Thus, a device other than the aspirator 50 (for example, a control device that controls the vehicular air conditioning device 1, or the like) can be provided at an end portion of the case body 10 in the X-axis direction. Accordingly, the degree of freedom in the layout of the vehicular air conditioning device 1 can be enhanced.

In addition, in the present embodiment, the inlet 53d is provided outside the main flow of the air flowing along the second flow path portion 16b. Accordingly, it is possible to form a structure in which the primary air introduction portion 53 does not obstruct the air flowing through the second flow path portion 16b.

In the present embodiment, the second flow path portion 16b is provided on a downstream side of the heater core 40. Accordingly, the air heated by the heater core 40 can be introduced into the aspirator 50. Thus, the air discharged from the aspirator 50 can also be heated air. As a result, for example, even when the air discharged from the aspirator 50 is discharged into the vehicle cabin, a space adjacent to the vehicle cabin, or the like, a decrease in the temperature of the air in the vehicle cabin can be suppressed. Therefore, a decrease in comfort in the vehicle cabin can be suppressed.

In the present embodiment, the notch 34 is formed at the sub-damper 33 which is arranged between the evaporator 20 and the inlet 53d in a state where the main damper 32 is located at the closing position. Thus, when the main damper 32 is in a closing state, the air having passed through the evaporator 20 is guided to the inlet 53d through the notch 34 formed at the sub-damper 33. That is, as compared with the case where the notch 34 is not formed at the sub-damper 33, it is possible to make it difficult for the sub-damper 33 to obstruct the air flowing from the evaporator 20 toward the inlet 53d when the main damper 32 is in the closing state. Accordingly, air can be suitably introduced from the inlet 53d, and thus the performance of the aspirator 50 can be improved.

Note that the present invention is not limited to the above-described embodiment and can be modified as appropriate without departing from the appended claims.

The vehicular air conditioning device according to the above-described embodiment is understood as follows, for example.

A vehicular air conditioning device according to an aspect of the present invention is a vehicular air conditioning device (1) for controlling a temperature of air introduced and supplying the air into a vehicle cabin. The vehicular air conditioning device (1) includes: a case (10) which forms an outer shell and through which air flows; a cooling unit (20) that is housed in the case and cools air flowing through the case; a heating unit (40) that is housed in the case and heats air flowing through the case; and an aspirator (50) that guides air in the vehicle cabin to a temperature detection unit by introducing air in the case. The case integrally includes a case upstream portion (12) in which the cooling unit and the heating unit are housed and a case downstream portion (13) through which air having flowed through the case upstream portion flows. The case upstream portion includes a first flow path portion (16a) that causes air to flow in a first direction (Z-axis direction) and a second flow path portion (16b) that is provided on a downstream side of the first flow path portion and causes air to flow in a second direction (Y-axis direction) being a direction intersecting the first direction. The second flow path portion (16b) is curved at a substantially right angle from a downstream end of the first flow path portion (16a) and extends in the second direction. The aspirator includes an introduction portion (53) and is provided at a central portion of the case in a third direction (X-axis direction) that is a direction intersecting the first direction and the second direction. The introduction portion includes an inlet (53d) formed at an upstream end of the introduction portion and introduces air flowing inside the case from the inlet. The upstream end of the introduction portion is connected to a downstream end portion of the second flow path portion from the first direction.

In the above configuration, the upstream end of the introduction portion is connected to a downstream end portion of the second flow path portion from the first direction. In the second flow path portion, air flows in the second direction. Thus, part of the air flowing through the second flow path portion is introduced into the introduction portion from the inlet by a static pressure. Accordingly, air can be introduced into the aspirator. Further, since air is introduced by a static pressure, a pressure loss can be reduced as compared with the case where air is introduced by a dynamic pressure. Therefore, the speed of the air flowing through the aspirator can be increased as compared with the case where air is introduced by a dynamic pressure, whereby the performance of the aspirator can be improved.

In the above configuration, the inlet opens to the second flow path of the case upstream portion in which the cooling unit and the heating unit are housed. The pressure of the air flowing through the case upstream portion is higher than the pressure of the air flowing through the case downstream portion. Thus, as compared with the case where the inlet opens to the case downstream portion, the difference between the pressure in the space to which the inlet opens and the pressure inside the aspirator is increased, whereby air can be easily taken from the inlet into the introduction portion. Accordingly, air can be suitably introduced into the aspirator, and thus the performance of the aspirator can be improved.

In the above configuration, the aspirator is provided at a central portion of the case in the third direction. That is, the aspirator is not provided at an end portion of the case in the third direction. Thus, a device other than the aspirator can be provided at an end portion of the case in the third direction. Accordingly, the degree of freedom in the layout of the vehicular air conditioning device can be enhanced.

In the vehicular air conditioning device according to the aspect of the present invention, the inlet is provided outside the main flow of the air flowing through the second flow path portion.

In the above configuration, the inlet is provided outside the main flow of the air flowing along the second flow path portion. Accordingly, it is possible to form a structure in which the introduction portion does not obstruct the air flowing through the second flow path portion.

In the vehicular air conditioning device according to the aspect of the present invention, the second flow path portion is provided on a downstream side of the heating unit.

In the above configuration, the second flow path portion is provided on a downstream side of the heating unit. Accordingly, the air heated by the heating unit can be introduced into the aspirator. Thus, the air discharged from the aspirator can also be heated air. As a result, for example, even when the air discharged from the aspirator is discharged into the vehicle cabin, a space adjacent to the vehicle cabin, or the like, a decrease in the temperature of the air in the vehicle cabin can be suppressed. Therefore, a decrease in comfort in the vehicle cabin can be suppressed.

The vehicular air conditioning device according to the aspect of the present invention includes an air mixing damper (30) including a first damper portion (32) and a second damper portion (33). The first damper portion can move between a closing position where a heating flow path (14a) for guiding air to the heating unit is closed and an opening position where the heating flow path is not closed. The second damper portion is arranged between the cooling unit and the inlet in a state where the first damper portion is located at the closing position. A notch (34) is formed at the second damper portion.

In the above configuration, the notch is formed at the second damper portion which is arranged between the cooling unit and the inlet in a state where the first damper portion is located at the closing position. Thus, when the first damper portion is in a closing state, the air having passed through the cooling unit is guided to the inlet through the notch formed at the second damper portion. That is, as compared with the case where the notch is not formed at the second damper portion, it is possible to make it difficult for the second damper portion to obstruct the air flowing from the cooling unit toward the inlet when the first damper portion is in the closing state. Accordingly, air can be suitably introduced from the inlet, and thus the performance of the aspirator can be improved.

### Reference Signs List

1: Vehicular air conditioning device
2: Air conditioning unit
3: Blower unit
10: Case body (case)
10A: First case
10B: Second case
12: Case upstream portion (upstream portion of case)
13: Case downstream portion (downstream portion of case)
14: Air flow path
14a: Heating flow path
14b: Bypass flow path
14c: Air mixing flow path
16: Heating flow path defining portion
16a: First flow path portion
16b: Second flow path portion
17: Face outlet
18: Defroster outlet
19: Foot outlet
20: Evaporator (cooling unit)
30: Air mixing damper
31: Rotor shaft
32: Main damper (first damper portion)
33: Sub-damper (second damper portion)
34: Notch
40: Heater core (heating unit)
42: Face damper
43: Foot damper
50: Aspirator
51: Nozzle
52: Main body
53: Primary air introduction portion (introduction portion)
53a: Horizontal portion
53b: Curved portion
53c: Vertical portion
53d: Inlet
54: Diffuser

## Claims

1. A vehicular air conditioning device (1) for controlling a temperature of air introduced, and supplying the air into a vehicle cabin, the vehicular air conditioning device (1) comprising:
a case (10) forming an outer shell and causing air to flow through the case (10);
a cooling unit (20) being housed in the case (10) and configured to cool air flowing through the case (10);
a heating unit (40) being housed in the case (10) and configured to heat air flowing through the case (10); and
an aspirator (50) configured to introduce air flowing in the case (10) to guide air in the vehicle cabin to a temperature detection unit,
the case (10) integrally including a case upstream portion (12) in which the cooling unit (20) and the heating unit (40) are housed and a case downstream portion (13) through which air having flowed through the case upstream portion (12) flows,
the case upstream portion (12) including a first flow path portion (16a) and a second flow path portion (16b), the first flow path portion (16a) causing air to flow in a first direction, the second flow path portion (16b) being provided on a downstream side of the first flow path portion (16a) and causing air to flow in a second direction intersecting the first direction,
the aspirator (50) including an introduction portion (53) including an inlet (53d) formed at an upstream end of the introduction portion (53) and being configured to introduce air flowing inside the case (10) from the inlet (53d), the aspirator (50) being disposed at a central portion of the case (10) in a third direction intersecting the first direction and the second direction, **characterized in that** the second flow path portion (16b) is curved at a substantially right angle from a downstream end of the first flow path portion (16a) and extends in the second direction, and in the introduction portion (53), the upstream end is connected to a downstream end portion of the second flow path portion (16b) from the first direction.

2. The vehicular air conditioning device (1) according to claim 1, wherein the inlet (53d) is disposed outside a main flow of air flowing through the second flow path portion (16b).

3. The vehicular air conditioning device (1) according to claim 1 or 2, wherein the second flow path portion (16b) is provided on a downstream side of the heating unit (40).

4. The vehicular air conditioning device (1) according to any one of claims 1 to 3, further comprising
an air mixing damper (30) including
a first damper portion (32) configured to move between a closing position where a heating flow path (14a) guiding air to the heating unit (40) is closed and an opening position where the heating flow path (14a) is not closed, and
a second damper portion (33) arranged between the cooling unit (20) and the inlet (53d) in a state where the first damper portion (32) is located at the closing position,
wherein a notch (34) is formed at the second damper portion (33).

## Patentansprüche

1. Fahrzeugklimaanlage (1) zur Regelung einer Temperatur der eingeführten Luft und zum Einblasen der Luft in einen Fahrzeuginnenraum, die Fahrzeugklimaanlage (1) umfassend:
ein Gehäuse (10), das eine Außenschale bildet und bewirkt, dass Luft durch das Gehäuse (10) strömt;
eine Kühleinheit (20), die in dem Gehäuse (10) untergebracht ist und konfiguriert ist, um die durch das Gehäuse (10) strömende Luft zu kühlen;
eine Heizeinheit (40), die in dem Gehäuse (10) untergebracht ist und konfiguriert ist, um die durch das Gehäuse (10) strömende Luft zu erwärmen; und
einen Aspirator (50), der konfiguriert ist, um in dem Gehäuse (10) strömende Luft einzuführen, um Luft im Fahrzeuginnenraum zu einer Temperaturerfassungseinheit zu führen,
wobei das Gehäuse (10) integral einen stromaufwärtigen Gehäuseabschnitt (12), in dem die Kühleinheit (20) und die Heizeinheit (40) untergebracht sind, und einen stromabwärtigen Gehäuseabschnitt (13), durch den Luft strömt, die durch den stromaufwärtigen Gehäuseabschnitt (12) geströmt ist, einschließt,
wobei der stromaufwärtige Gehäuseabschnitt (12) einen ersten Durchflussweg-Abschnitt (16a) und einen zweiten Durchflussweg-Abschnitt (16b) einschließt, wobei der erste Durchflussweg-Abschnitt (16a) bewirkt, dass Luft in einer ersten Richtung strömt, wobei der zweite Durchflussweg-Abschnitt (16b) auf einer stromabwärtigen Seite des ersten Durchflussweg-Abschnitts (16a) bereitgestellt ist und bewirkt, dass Luft in einer zweiten Richtung strömt, die die erste Richtung schneidet,
wobei der Aspirator (50) einen Einführungsabschnitt (53) einschließt, der einen Einlass (53d) einschließt, der an einem stromaufwärtigen Ende des Einführungsabschnitts (53) gebildet ist und konfiguriert ist, um Luft, die innerhalb des Gehäuses (10) strömt, von dem Einlass (53d) einzuführen, wobei der Aspirator (50) in einem zentralen Abschnitt des Gehäuses (10) in einer dritten Richtung angeordnet ist, die die erste Richtung und die zweite Richtung schneidet,
**dadurch gekennzeichnet, dass** der zweite Durchflussweg-Abschnitt (16b) von einem stromabwärtigen Ende des ersten Durchflussweg-Abschnitts (16a) im Wesentlichen rechtwinklig abgewinkelt ist und sich in der zweiten Richtung erstreckt, und dass bei dem Einführungsabschnitt (53) das stromaufwärtige Ende aus der ersten Richtung mit einem stromabwärtigen Endabschnitt des zweiten Durchflussweg-Abschnitts (16b) verbunden ist.

2. Fahrzeugklimaanlage (1) nach Anspruch 1, wobei der Einlass (53d) außerhalb eines Hauptstroms der durch den zweiten Durchflussweg-Abschnitt (16b) strömenden Luft angeordnet ist.

3. Fahrzeugklimaanlage (1) nach Anspruch 1 oder 2, wobei der zweite Durchflussweg-Abschnitt (16b) auf einer stromabwärtigen Seite der Heizeinheit (40) bereitgestellt ist.

4. Fahrzeugklimaanlage (1) nach einem der Ansprüche 1 bis 3, weiter umfassend
eine Luftmischklappe (30), einschließend
einen ersten Klappenabschnitt (32), der konfiguriert ist, um sich zwischen einer Schließposition, in der ein Heiz-Durchflussweg (14a), der Luft zur Heizeinheit (40) führt, geschlossen ist, und einer Öffnungsposition, in der der Heiz-Durchflussweg (14a) nicht geschlossen ist, zu bewegen, und
einen zweiten Klappenabschnitt (33), der zwischen der Kühleinheit (20) und dem Einlass (53d) eingerichtet ist, in einem Zustand, in dem der erste Klappenabschnitt (32) sich an der Schließposition befindet,
wobei an dem zweiten Klappenabschnitt (33) eine Kerbe (34) gebildet ist.

## Revendications

1. Dispositif de climatisation (1) de véhicule destiné à commander la température de l'air introduit et à apporter l'air dans un habitacle de véhicule, le dispositif de climatisation (1) de véhicule comprenant :
un boîtier (10) formant une enveloppe externe et amenant l'air à s'écouler à travers le boîtier (10) ;
une unité de refroidissement (20) logée dans le boîtier (10) et configurée pour refroidir l'air s'écoulant à travers le boîtier (10) ;
une unité de chauffage (40) logée dans le boîtier (10) et configurée pour chauffer l'air s'écoulant à travers le boîtier (10) ; et
un aspirateur (50) configuré pour introduire de l'air s'écoulant dans le boîtier (10) afin de guider l'air présent dans l'habitacle de véhicule vers une unité de détection de température,
le boîtier (10) incluant intégralement une portion amont de boîtier (12), dans laquelle l'unité de refroidissement (20) et l'unité de chauffage (40) sont logées et une portion aval de boîtier (13) à travers laquelle s'écoule l'air qui s'est écoulé à travers la portion amont de boîtier (12),
la portion amont de boîtier (12) incluant une première portion de canal d'écoulement (16a) et une seconde portion de canal d'écoulement (16b), la première portion de canal d'écoulement (16a) amenant l'air à s'écouler dans une première direction, la seconde portion de canal d'écoulement (16b) étant disposée sur un côté aval de la première portion de canal d'écoulement (16a) et amenant l'air à s'écouler dans une deuxième direction coupant la première direction,
l'aspirateur (50) incluant une portion d'introduction (53) incluant une entrée (53d) formée au niveau d'une extrémité amont de la portion d'introduction (53) et étant configurée pour introduire l'air s'écoulant à l'intérieur du boîtier (10) depuis l'entrée (53d), l'aspirateur (50) étant disposé au niveau d'une portion centrale du boîtier (10) dans une troisième direction coupant la première direction et la deuxième direction,
**caractérisé en ce que** la seconde portion de canal d'écoulement (16b) est incurvée sensiblement à angle droit à partir d'une extrémité aval de la première portion de canal d'écoulement (16a) et s'étend dans la deuxième direction, et, dans la portion d'introduction (53), l'extrémité amont est reliée à une portion d'extrémité aval de la seconde portion de canal d'écoulement (16b) depuis la première direction.

2. Dispositif de climatisation (1) de véhicule selon la revendication 1, dans lequel l'entrée (53d) est disposée en dehors d'un écoulement principal d'air qui s'écoule à travers la seconde portion de canal d'écoulement (16b).

3. Dispositif de climatisation (1) de véhicule selon la revendication 1 ou revendication 2, dans lequel la seconde portion de canal d'écoulement (16b) est disposée sur un côté aval de l'unité de chauffage (40).

4. Dispositif de climatisation (1) de véhicule selon l'une quelconque des revendications 1 à 3, comprenant en outre
un volet (30) de mélange d'air incluant
une première portion de volet (32) configurée pour se déplacer entre une position de fermeture où un canal d'écoulement de chauffage (14a) guidant l'air vers l'unité de chauffage (40) est fermé et une position d'ouverture où le canal d'écoulement de chauffage (14a) n'est pas fermé, et
une seconde portion de volet (33) agencée entre l'unité de refroidissement (20) et l'entrée (53d) dans un état dans lequel la première portion de volet (32) est située à la position de fermeture,
dans lequel une encoche (34) est formée au niveau de la seconde portion de volet (33).
